# EUROPEAN PATENT APPLICATION

(11) **EP 4 218 442 A2**
(43) Date of publication of application: **02.08.2023**
(21) Application number: 23162710.0
(22) Date of filing: 30.09.2020
(51) Int. Cl.: A24F 40/42, A24F 40/10

(54) **AEROSOL PROVISION SYSTEMS**

(30) Priority: 14.10.2019 GB 201914831
(62) Divisional of application: 20789217.5
(71) Applicant: Nicoventures Trading Limited, London WC2R 3LA (GB)
(72) Inventor: HUGHES, Steve, London, WC2R 3LA (GB)
(74) Representative: D Young & Co LLP

(57) **Abstract**

A cartridge 2;200 for an aerosol provision system 1. The cartridge 2;200 comprises a reservoir 31 for containing aerosolisable material for vaporising, and an air channel extending from an air inlet 50 for the cartridge 2 to an outlet 60. The air channel comprises a first portion 204, for receiving vaporised aerosolisable-material, extending from the outlet 60. The reservoir 31 is at least partially thermally insulated from the first portion 204 of the air channel. In that way, the thermal insulation reduces the extent of vaporised aerosolisable-material that might be relatively hot as compared to the relatively cooler aerosolisable-material in the located in the reservoir 31 from condensing inside the first portion 204 by way of the cooler aerosolisable-material located in the reservoir 31.

## Description

### Field

The present disclosure relates to aerosol provision systems such as nicotine delivery systems (e.g. electronic cigarettes and the like).

### Background

Electronic aerosol provision systems such as electronic cigarettes (e-cigarettes) generally contain an aerosol precursor material, such as a reservoir of a source liquid containing a formulation, typically including nicotine, or a solid material such a tobacco-based product, from which an aerosol is generated for inhalation by a user, for example through heat vaporisation. Thus, an aerosol provision system will typically comprise a vaporiser, e.g. a heating element, arranged to vaporise a portion of precursor material to generate an aerosol in an aerosol generation region of an air channel through the aerosol provision system. As a user inhales on the device and electrical power is supplied to the vaporiser, air is drawn into the device through one or more inlet holes and along the air channel to the aerosol generation region, where the air mixes with the vaporised precursor material and forms a condensation aerosol. The air drawn through the aerosol generation region continues along the air channel to a mouthpiece opening, carrying some of the aerosol with it, and out through the mouthpiece opening for inhalation by the user.

It is common for aerosol provision systems to comprise a modular assembly, often having two main functional parts, namely a control unit and disposable / replaceable cartridge part. Typically the cartridge part will comprise the consumable aerosol precursor material and the vaporiser (atomiser), while the control unit part will comprise longer-life items, such as a rechargeable battery, device control circuitry, activation sensors and user interface features. The control unit may also be referred to as a reusable part or battery section and the replaceable cartridge may also be referred to as a disposable part or cartomiser.

The control unit and cartridge are mechanically coupled together at an interface for use, for example using a screw thread, bayonet, latched or friction fit fixing. When the aerosol precursor material in a cartridge has been exhausted, or the user wishes to switch to a different cartridge having a different aerosol precursor material, the cartridge may be removed from the control unit and a replacement cartridge may be attached to the device in its place.

A potential drawback for cartridges containing liquid aerosol precursor (e-liquid) is the risk of leakage. An e-cigarette cartridge will typically have a mechanism, e.g. a capillary wick, for drawing aerosolisable material from an aerosolisable material reservoir to a vaporiser located in an air path / channel connecting from an air inlet to an aerosol outlet for the cartridge. Because there is a fluid transport path from the aerosolisable material reservoir into the open air channel through the cartridge, there is a corresponding risk of aerosolisable material leaking from the cartridge. Leakage is undesirable both from the perspective of the end user naturally not wanting to get the e-liquid on their hands or other items, and also from a reliability perspective, since leakage from an end of the cartridge connected to the control unit may damage the control unit, for example due to corrosion. Some approaches to reduce the risk of leakage may involve restricting the flow of aerosolisable material to the vaporiser, for example by tightly clamping a wick where it enters the air channel. In normal use, the aerosolisable material taken up by the wick is sufficient to keep the vaporiser cool (i.e., at an ideal operating temperature), but when the aerosolisable material taken up is insufficient (e.g., when the aerosolisable material in the reservoir runs low) this can in some scenarios give rise to overheating and undesirable flavours.

Various approaches are described herein which seek to help address or mitigate some of the issues discussed above. Also described herein are cartridges which achieve a degree of thermal insulation between vaporised aerosolisable-material from the cartridge and aerosolisable material inside the aerosolisable material reservoir. Also described herein are cartridges which comprise an aerosolisable-material-level observation means for allowing a user to observe a level of aerosolisable material inside the aerosolisable material reservoir.

### Summary

According to a first aspect of certain embodiments there is provided a cartridge for an aerosol provision system, wherein the cartridge comprises:
a reservoir for containing aerosolisable material for vaporising;
an air channel extending from an air inlet for the cartridge to an outlet; wherein the air channel comprises a first portion, for receiving vaporised aerosolisable-material, extending from the outlet;
wherein the reservoir is at least partially thermally insulated from the first portion of the air channel.

According to a second aspect of certain embodiments there is provided an aerosol provision system comprising the cartridge from the first aspect and a control unit, wherein the control unit comprises a cartridge receiving section that includes an interface arranged to cooperatively engage with the cartridge so as to releasably couple the cartridge to the control unit, wherein the control unit further comprises a power supply and control circuitry.

According to a third aspect of certain embodiments there is provided an aerosol provision system comprising:
a reservoir for containing aerosolisable material for vaporising;
an air channel extending from an air inlet to an outlet via an aerosol generating region; wherein the air channel comprises a first portion, for receiving vaporised aerosolisable-material, extending from aerosol generating region to the outlet;
wherein the reservoir is at least partially thermally insulated from the first portion of the air channel.

It will be appreciated that features and aspects of the invention described above in relation to the various aspects of the invention are equally applicable to, and may be combined with, embodiments of the invention according to other aspects of the invention as appropriate, and not just in the specific combinations described herein.

### Brief Description of the Drawings

Embodiments of the invention will now be described, by way of example only, with reference to the accompanying drawings, in which:
Figure 1 schematically represents in perspective view an aerosol provision system comprising a cartridge and control unit (shown separated) in accordance with certain embodiments of the disclosure;
Figure 2 schematically represents in exploded perspective view of components of the cartridge of the aerosol provision system of Figure 1;
Figures 3A to 3C schematically represent various cross-section views of a housing part of the cartridge of the aerosol provision system of Figure 1;
Figures 4A and 4B schematically represent a perspective view and a plan view of a dividing wall element of the cartridge of the aerosol provision system of Figure 1;
Figures 5A to 5C schematically represent two perspective views and a plan view of a resilient plug of the cartridge of the aerosol provision system of Figure 1;
Figures 6A and 6B schematically represent a perspective view and a plan view of a bottom cap of the cartridge of the aerosol provision system of Figure 1;
Figure 7 schematically represent a respective cross section view of a modified cartridge for use with the control unit shown in Figure 1 to form an aerosol provision system in accordance with certain embodiments of the disclosure; and
Figures 8A-8C schematically represent a respective front view, first side perspective view, and second side perspective view, of another modified cartridge for use with the control unit shown in Figure 1 to form an aerosol provision system in accordance with certain embodiments of the disclosure.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

The present disclosure relates to non-combustible aerosol provision systems, which may also be referred to as aerosol provision systems, such as e-cigarettes. According to the present disclosure, a "non-combustible" aerosol provision system is one where a constituent aerosolisable material of the aerosol provision system (or component thereof) is not combusted or burned in order to facilitate delivery to a user. Aerosolisable material, which also may be referred to herein as aerosol generating material or aerosol precursor material, is material that is capable of generating aerosol, for example when heated, irradiated or energized in any other way.

Throughout the following description the term "e-cigarette" or "electronic cigarette" may sometimes be used, but it will be appreciated this term may be used interchangeably with aerosol provision system / device and electronic aerosol provision system / device. An electronic cigarette may also known as a vaping device or electronic nicotine delivery system (END), although it is noted that the presence of nicotine in the aerosolisable material is not a requirement.

In some embodiments, the non-combustible aerosol provision system is a hybrid system to generate aerosol using a combination of aerosolisable materials, one or a plurality of which may be heated. In some embodiments, the hybrid system comprises a liquid or gel aerosolisable material and a solid aerosolisable material. The solid aerosolisable material may comprise, for example, tobacco or a non-tobacco product.

Typically, the non-combustible aerosol provision system may comprise a non-combustible aerosol provision device and an article for use with the non-combustible aerosol provision device. However, it is envisaged that articles which themselves comprise a means for powering an aerosol generating component may themselves form the non-combustible aerosol provision system.

In some embodiments, the article for use with the non-combustible aerosol provision device may comprise an aerosolisable material (or aerosol precursor material), an aerosol generating component (or vaporiser), an aerosol generating area, a mouthpiece, and/or an area for receiving aerosolisable material.

In some embodiments, the aerosol generating component is a heater capable of interacting with the aerosolisable material so as to release one or more volatiles from the aerosolisable material to form an aerosol. In some embodiments, the aerosol generating component is capable of generating an aerosol from the aerosolisable material without heating. For example, the aerosol generating component may be capable of generating an aerosol from the aerosolisable material without applying heat thereto, for example via one or more of vibrational, mechanical, pressurisation or electrostatic means.

In some embodiments, the substance to be delivered may be an aerosolisable material which may comprise an active constituent, a carrier constituent and optionally one or more other functional constituents.

The active constituent may comprise one or more physiologically and/or olfactory active constituents which are included in the aerosolisable material in order to achieve a physiological and/or olfactory response in the user. The active constituent may for example be selected from nutraceuticals, nootropics, and psychoactives. The active constituent may be naturally occurring or synthetically obtained. The active constituent may comprise for example nicotine, caffeine, taurine, theine, a vitamin such as B6 or B12 or C, melatonin, a cannabinoid, or a constituent, derivative, or combinations thereof. The active constituent may comprise a constituent, derivative or extract of tobacco or of another botanical. In some embodiments, the active constituent is a physiologically active constituent and may be selected from nicotine, nicotine salts (e.g. nicotine ditartrate/nicotine bitartrate), nicotine-free tobacco substitutes, other alkaloids such as caffeine, or mixtures thereof.

In some embodiments, the active constituent is an olfactory active constituent and may be selected from a "flavour" and/or "flavourant" which, where local regulations permit, may be used to create a desired taste, aroma or other somatosensorial sensation in a product for adult consumers. In some instances such constituents may be referred to as flavours, flavourants, cooling agents, heating agents, and/or sweetening agents. They may include naturally occurring flavour materials, botanicals, extracts of botanicals, synthetically obtained materials, or combinations thereof (e.g., tobacco, cannabis, licorice (liquorice), hydrangea, eugenol, Japanese white bark magnolia leaf, chamomile, fenugreek, clove, maple, matcha, menthol, Japanese mint, aniseed (anise), cinnamon, turmeric, Indian spices, Asian spices, herb, wintergreen, cherry, berry, red berry, cranberry, peach, apple, orange, mango, clementine, lemon, lime, tropical fruit, papaya, rhubarb, grape, durian, dragon fruit, cucumber, blueberry, mulberry, citrus fruits, Drambuie, bourbon, scotch, whiskey, gin, tequila, rum, spearmint, peppermint, lavender, aloe vera, cardamom, celery, cascarilla, nutmeg, sandalwood, bergamot, geranium, khat, naswar, betel, shisha, pine, honey essence, rose oil, vanilla, lemon oil, orange oil, orange blossom, cherry blossom, cassia, caraway, cognac, jasmine, ylang-ylang, sage, fennel, wasabi, piment, ginger, coriander, coffee, hemp, a mint oil from any species of the genus Mentha, eucalyptus, star anise, cocoa, lemongrass, rooibos, flax, ginkgo biloba, hazel, hibiscus, laurel, mate, orange skin, rose, tea such as green tea or black tea, thyme, juniper, elderflower, basil, bay leaves, cumin, oregano, paprika, rosemary, saffron, lemon peel, mint, beefsteak plant, curcuma, cilantro, myrtle, cassis, valerian, pimento, mace, damien, marjoram, olive, lemon balm, lemon basil, chive, carvi, verbena, tarragon, limonene, thymol, camphene), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, liquid such as an oil, solid such as a powder, or gasone or more of extracts (e.g., licorice, hydrangea, Japanese white bark magnolia leaf, chamomile, fenugreek, clove, menthol, Japanese mint, aniseed, cinnamon, herb, wintergreen, cherry, berry, peach, apple, Drambuie, bourbon, scotch, whiskey, spearmint, peppermint, lavender, cardamom, celery, cascarilla, nutmeg, sandalwood, bergamot, geranium, honey essence, rose oil, vanilla, lemon oil, orange oil, cassia, caraway, cognac, jasmine, ylang-ylang, sage, fennel, piment, ginger, anise, coriander, coffee, or a mint oil from any species of the genus Mentha), flavour enhancers, bitterness receptor site blockers, sensorial receptor site activators or stimulators, sugars and/or sugar substitutes (e.g., sucralose, acesulfame potassium, aspartame, saccharine, cyclamates, lactose, sucrose, glucose, fructose, sorbitol, or mannitol), and other additives such as charcoal, chlorophyll, minerals, botanicals, or breath freshening agents. They may be imitation, synthetic or natural ingredients or blends thereof. They may be in any suitable form, for example, oil, liquid, or powder.

In some embodiments, the flavour comprises menthol, spearmint and/or peppermint. In some embodiments, the flavour comprises flavour components of cucumber, blueberry, citrus fruits and/or redberry. In some embodiments, the flavour comprises eugenol. In some embodiments, the flavour comprises flavour components extracted from tobacco. In some embodiments, the flavour may comprise a sensate, which is intended to achieve a somatosensorial sensation which are usually chemically induced and perceived by the stimulation of the fifth cranial nerve (trigeminal nerve), in addition to or in place of aroma or taste nerves, and these may include agents providing heating, cooling, tingling, numbing effect. A suitable heat effect agent may be, but is not limited to, vanillyl ethyl ether and a suitable cooling agent may be, but not limited to eucalyptol, WS-3.

The carrier constituent may comprise one or more constituents capable of forming an aerosol. In some embodiments, the carrier constituent may comprise one or more of glycerine, glycerol, propylene glycol, diethylene glycol, triethylene glycol, tetraethylene glycol, 1,3-butylene glycol, erythritol, meso-Erythritol, ethyl vanillate, ethyl laurate, a diethyl suberate, triethyl citrate, triacetin, a diacetin mixture, benzyl benzoate, benzyl phenyl acetate, tributyrin, lauryl acetate, lauric acid, myristic acid, and propylene carbonate.

The one or more other functional constituents may comprise one or more of pH regulators, colouring agents, preservatives, binders, fillers, stabilizers, and/or antioxidants.

As noted above, aerosol provision systems (e-cigarettes) often comprise a modular assembly including both a reusable part (control unit) and a replaceable (disposable) cartridge part. Devices conforming to this type of two-part modular configuration may generally be referred to as two-part devices. It is also common for electronic cigarettes to have a generally elongate shape. For the sake of providing a concrete example, certain embodiments of the disclosure described herein comprise this kind of generally elongate two-part device employing disposable cartridges. However, it will be appreciated the underlying principles described herein may equally be adopted for other electronic cigarette configurations, for example modular devices comprising more than two parts, as devices conforming to other overall shapes, for example based on so-called box-mod high performance devices that typically have a more boxy shape..

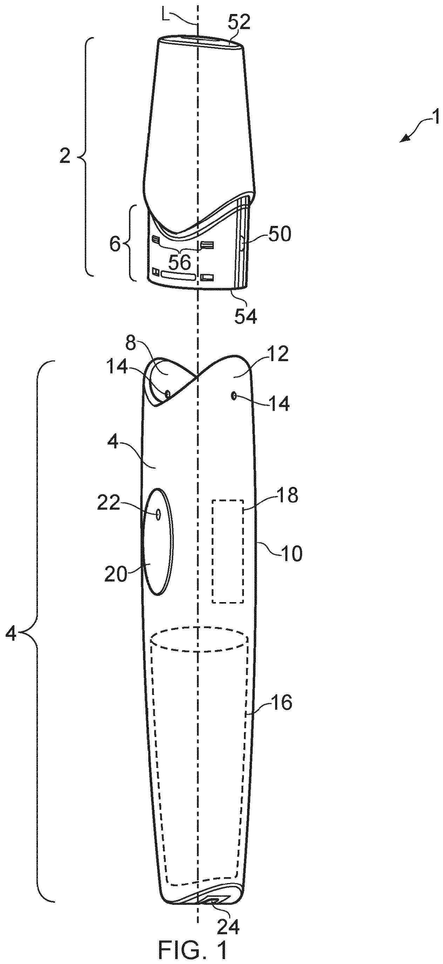

Figure 1 is a schematic perspective view of an example aerosol provision system / device (e-cigarette) 1 in accordance with certain embodiments of the disclosure. Terms concerning the relative location of various aspects of the electronic cigarette (e.g. terms such as upper, lower, above, below, top, bottom etc.) are used herein with reference to the orientation of the electronic cigarette as shown in Figure 1 (unless the context indicates otherwise). However, it will be appreciated this is purely for ease of explanation and is not intended to indicate there is any required orientation for the electronic cigarette in use.

The e-cigarette 1 comprises two main components, namely a cartridge 2 and a control unit 4. The control unit 4 and the cartridge 2 are shown separated in Figure 1, but are coupled together when in use.

The cartridge 2 and control unit 4 are coupled by establishing a mechanical and electrical connection between them. The specific manner in which the mechanical and electrical connection is established is not of primary significance to the principles described herein and may be established in accordance with conventional techniques, for example based around a screw thread, bayonet, latched or friction-fit mechanical fixing with appropriately arranged electrical contacts / electrodes for establishing the electrical connection between the two parts as appropriate. For example electronic cigarette 1 represented in Figure 1, the cartridge comprises a mouthpiece end 52 and an interface end 54 and is coupled to the control unit by inserting an interface end portion 6 at the interface end of the cartridge into a corresponding receptacle 8 / receiving section of the control unit. The interface end portion 6 of the cartridge is a close fit to be receptacle 8 and includes protrusions 56 which engage with corresponding detents in the interior surface of a receptacle wall 12 defining the receptacle 8 to provide a releasable mechanical engagement between the cartridge and the control unit. An electrical connection is established between the control unit and the cartridge via a pair of electrical contacts on the bottom of the cartridge (not shown in Figure 1) and corresponding sprung contact pins in the base of the receptacle 8 (not shown in Figure 1). As noted above, the specific manner in which the electrical connection is established is not significant to the principles described herein, and indeed some implementations might not have an electrical connection between the cartridge and a control unit at all, for example because the transfer of electrical power from the reusable part to the cartridge may be wireless (e.g. based on electromagnetic induction techniques).

The electronic cigarette 1 has a generally elongate shape extending along a longitudinal axis L. When the cartridge is coupled to the control unit, the overall length of the electronic cigarette in this example (along the longitudinal axis) is around 12.5 cm. The overall length of the control unit is around 9 cm and the overall length of the cartridge is around 5 cm (i.e. there is around 1.5 cm of overlap between the interface end portion 6 of the cartridge and the receptacle 8 of the control unit when they are coupled together). The electronic cigarette has a cross-section which is generally oval and which is largest around the middle of the electronic cigarette and tapers in a curved manner towards the ends. The cross-section around the middle of the electronic cigarette has a width of around 2.5 cm and a thickness of around 1.7 cm. The end of the cartridge has a width of around 2 cm and a thickness of around 0.6 mm, whereas the other end of the electronic cigarette has a width of around 2 cm and a thickness of around 1.2 cm. The outer housing of the electronic cigarette is in this example is formed from plastic. It will be appreciated the specific size and shape of the electronic cigarette and the material from which it is made is not of primary significance to the principles described herein and may be different in different implementations. That is to say, the principles described herein may equally be adopted for electronic cigarettes having different sizes, shapes and / or materials.

The control unit 4 may in accordance with certain embodiments of the disclosure be broadly conventional in terms of its functionality and general construction techniques. In the example of Figure 1, the control unit 4 comprises a plastic outer housing 10 including the receptacle wall 12 that defines the receptacle 8 for receiving the end of the cartridge as noted above.

The outer housing 10 of the control unit 4 in this example has a generally oval cross section conforming to the shape and size of the cartridge 2 at their interface to provide a smooth transition between the two parts. The receptacle 8 and the end portion 6 of the cartridge 2 are symmetric when rotated through 180° so the cartridge can be inserted into the control unit in two different orientations. The receptacle wall 12 includes two control unit air inlet openings 14 (i.e. holes in the wall). These openings 14 are positioned to align with an air inlet 50 for the cartridge when the cartridge is coupled to the control unit. A different one of the openings 14 aligns with the air inlet 50 of the cartridge in the different orientations. It will be appreciated some implementations may not have any degree of rotational symmetry such that the cartridge is couplable to the control unit in only one orientation while other implementations may have a higher degree of rotational symmetry such that the cartridge is couplable to the control unit in more orientations.

The control unit further comprises a battery 16 for providing operating power for the electronic cigarette, control circuitry 18 for controlling and monitoring the operation of the electronic cigarette, a user input button 20, an indicator light 22, and a charging port 24.

The battery 16 in this example is rechargeable and may be of a conventional type, for example of the kind normally used in electronic cigarettes and other applications requiring provision of relatively high currents over relatively short periods. The battery 16 may be recharged through the charging port 24, which may, for example, comprise a USB connector.

The input button 20 in this example is a conventional mechanical button, for example comprising a sprung mounted component which may be pressed by a user to establish an electrical contact in underlying circuitry. In this regard, the input button may be considered an input device for detecting user input, e.g. to trigger aerosol generation, and the specific manner in which the button is implemented is not significant. For example, other forms of mechanical button or touch-sensitive button (e.g. based on capacitive or optical sensing techniques) may be used in other implementations, or there may be no button and the device may rely on a puff detector for triggering aerosol generation.

The indicator light 22 is provided to give a user with a visual indication of various characteristics associated with the electronic cigarette, for example, an indication of an operating state (e.g. on / off / standby), and other characteristics, such as battery life or fault conditions. Different characteristics may, for example, be indicated through different colours and / or different flash sequences in accordance with generally conventional techniques.

The control circuitry 18 is suitably configured / programmed to control the operation of the electronic cigarette to provide conventional operating functions in line with the established techniques for controlling electronic cigarettes. The control circuitry (processor circuitry) 18 may be considered to logically comprise various sub-units / circuitry elements associated with different aspects of the electronic cigarette's operation. For example, depending on the functionality provided in different implementations, the control circuitry 18 may comprises power supply control circuitry for controlling the supply of power from the battery/power supply to the cartridge in response to user input, user programming circuitry for establishing configuration settings (e.g. user-defined power settings) in response to user input, as well as other functional units / circuitry associated functionality in accordance with the principles described herein and conventional operating aspects of electronic cigarettes, such as indicator light display driving circuitry and user input detection circuitry. It will be appreciated the functionality of the control circuitry 18 can be provided in various different ways, for example using one or more suitably programmed programmable computer(s) and / or one or more suitably configured application-specific integrated circuit(s) / circuitry / chip(s) / chipset(s) configured to provide the desired functionality.

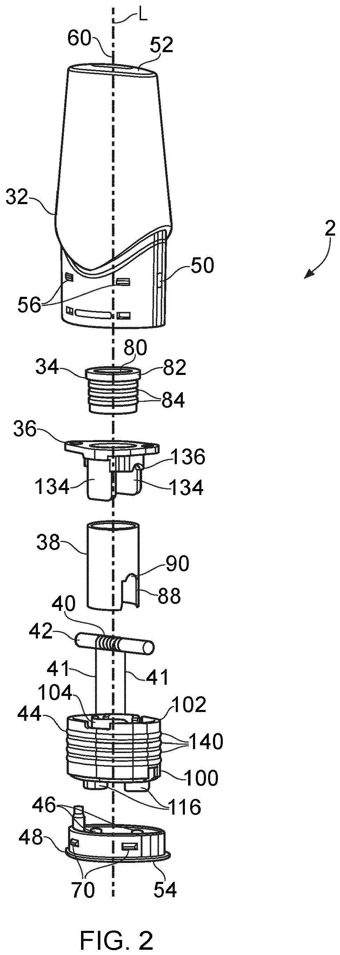

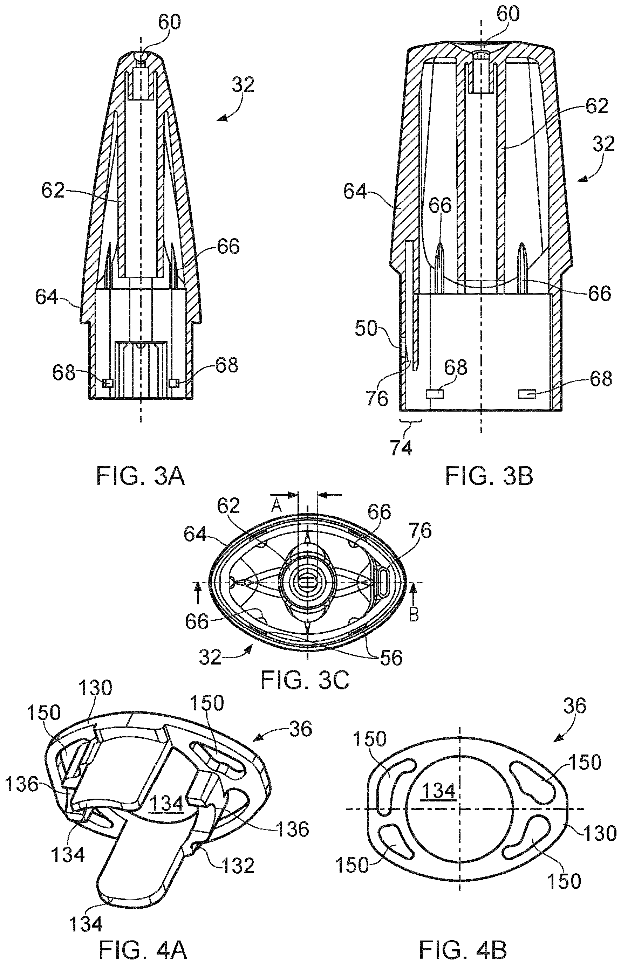

Figure 2 is an exploded schematic perspective view of the cartridge 2 (exploded along the longitudinal axis L). The cartridge 2 comprises a housing part 32, an air channel seal 34, a dividing wall element 36, an outlet tube 38, a vaporiser/heating element 40, an aerosolisable material transport element 42, a plug 44, and an end cap 48 with contact electrodes 46. Figures 3 to 6 schematically represents some of these components in more detail.

Figure 3A is a schematic cut-away view of the housing part 32 through the longitudinal axis L where the housing part 32 is thinnest. Figure 3B is a schematic cut-away view of the housing part 32 through the longitudinal axis L where the housing part 32 is widest. Figure 3C is a schematic view of the housing part along the longitudinal axis L from the interface end 54 (i.e. viewed from below in the orientation of Figures 3A and 3B).

Figures 4A is a schematic perspective view of the dividing wall element 36 as seen from below. Figure 4B is a schematic cross-section through an upper part of the dividing wall element 36 as viewed from below.

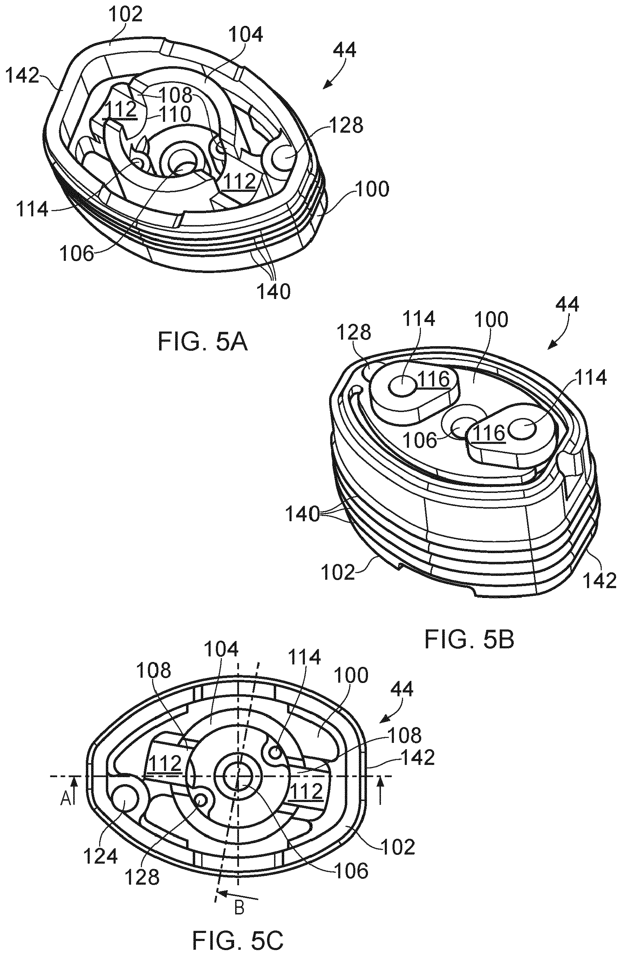

Figure 5A is a schematic perspective view of the plug 44 from above and Figure 5B is a schematic perspective view of the plug 44 from below. Figure 5C is a schematic view of the plug 44 along the longitudinal axis L seen from the mouthpiece end 52 of the cartridge (i.e. viewed from above for the orientation in Figures 1 and 2).

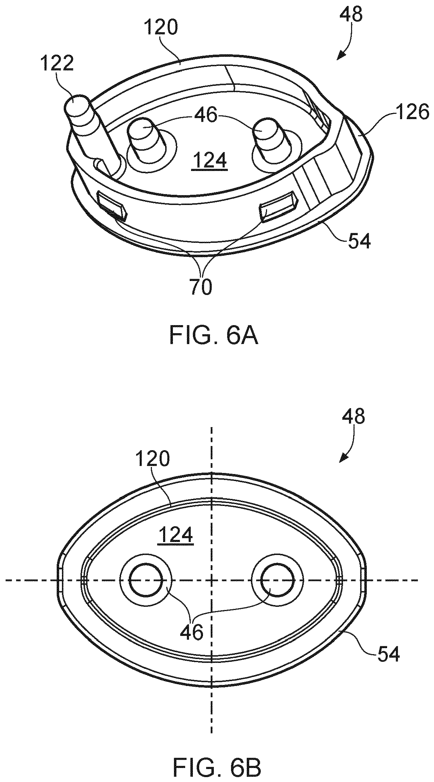

Figure 6A is a schematic perspective view of the end cap 48 from above. Figure 6B is a schematic view of the end cap 48 along the longitudinal axis L seen from the mouthpiece end 52 of the cartridge (i.e. from above).

The housing part 32 in this example comprises a housing outer wall 64 and a housing inner tube 62 which in this example are formed from a single moulding of polypropylene. The housing outer wall 64 defines the external appearance of the cartridge 2 and the housing inner tube 62 defines a part the air channel through the cartridge. The housing part is open at the interface end 54 of the cartridge and closed at the mouthpiece end 52 of the cartridge except for a mouthpiece opening / aerosol outlet 60 in fluid communication with the housing inner tube 62. The housing part 32 includes an opening in a sidewall which provides the air inlet 50 for the cartridge. The air inlet 50 in this example has an area of around 2 mm². The outer surface of the outer wall 64 of the housing part 32 includes the protrusions 56 discussed above which engage with corresponding detents in the interior surface of the receptacle wall 12 defining the receptacle 8 to provide a releasable mechanical engagement between the cartridge and the control unit. The inner surface of the outer wall 64 of the housing part includes further protrusions 66 which act to provide an abutment stop for locating the dividing wall element 36 along the longitudinal axis L when the cartridge is assembled. The outer wall 64 of the housing part 32 further comprises holes which provide latch recesses 68 arranged to receive corresponding latch projections 70 in the end cap to fix the end cap to be housing part when the cartridge is assembled.

The outer wall 64 of the housing part 32 includes a double-walled section 74 that defines a gap 76 in fluid communication with the air inlet 50. The gap 76 provides a portion of the air channel through the cartridge. In this example the doubled-walled section 74 of the housing part 32 is arranged so the gap defines an air channel running within the housing outer wall 64 parallel to the longitudinal axis with a cross-section in a plane perpendicular to the longitudinal axis of around 3 mm². The gap / portion of air channel 76 defined by the double-walled section of the housing part extends down to the open end of the housing part 32.

The air channel seal 34 is a silicone moulding generally in the form of a tube having a through hole 80. The outer wall of the air channel seal 34 includes circumferential ridges 84 and an upper collar 82. The inner wall of the air channel seal 34 also includes circumferential ridges, but these are not visible in Figure 2. When the cartridge is assembled the air channel seal 34 is mounted to the housing inner tube 62 with an end of the housing inner tube 62 extending partly into the through hole 80 of the air channel seal 34. The through hole 80 in the air channel seal has a diameter of around 5.8 mm in its relaxed state whereas the end of the housing inner tube 62 has a diameter of around 6.2 mm so that a seal is formed when the air channel seal 34 is stretched to accommodate the housing inner tube 62. This seal is facilitated by the ridges on the inner surface of the air channel seal 34.

The outlet tube 38 comprises a tubular section, for instance made of ANSI 304 stainless steel or polypropylene, with an internal diameter of around 8.6 mm and a wall thickness of around 0.2 mm. The bottom end of the outlet tube 38 includes a pair of diametrically opposing slots 88 with an end of each slot having a semi-circular recess 90. When the cartridge is assembled the outlet tube 38 mounts to the outer surface of the air channel seal 34. The outer diameter of the air channel seal is around 9.0 mm in its relaxed state so that a seal is formed when the air channel seal 34 is compressed to fit inside the outlet tube 38. This seal is facilitated by the ridges 84 on the outer surface of the air channel seal 34. The collar 80 on the air channel seal 34 provides a stop for the outlet tube 38.

The aerosolisable material transport element 42 comprises a capillary wick and the vaporiser 40 comprises a resistance wire heater wound around the capillary wick. In addition to the portion of the resistance wire wound around the capillary wick, the vaporiser comprises electrical leads 41 which pass through holes in the plug 44 to contact electrodes 46 mounted to the end cap 54 to allow power to be supplied to the vaporiser via the electrical interface the established when the cartridge is connected to a control unit. The vaporiser leads 41 may comprise the same material as the resistance wire wound around the capillary wick, or may comprise a different material (e.g. lower-resistance material) connected to the resistance wire wound around the capillary wick. In this example the heater coil 40 comprises a nickel iron alloy wire and the wick 42 comprises a glass fibre bundle. The vaporiser and aerosolisable material transport element may be provided in accordance with any conventional techniques and is may comprise different forms and / or different materials. For example, in some implementations the wick may comprise fibrous or solid a ceramic material and the heater may comprise a different alloy. In other examples the heater and wick may be combined, for example in the form of a porous and a resistive material. More generally, it will be appreciated the specific nature aerosolisable material transport element and vaporiser is not of primary significance to the principles described herein.

When the cartridge is assembled, the wick 42 is received in the semi-circular recesses 90 of the outlet tube 38 so that a central portion of the wick about which the heating coil is would is inside the outlet tube while end portions of the wick are outside the outlet tube 38.

The plug 44 in this example comprises a single moulding of silicone, may be resilient. The plug comprises a base part 100 with an outer wall 102 extending upwardly therefrom (i.e. towards the mouthpiece end of the cartridge). The plug further comprises an inner wall 104 extending upwardly from the base part 100 and surrounding a through hole 106 through the base part 100.

The outer wall 102 of the plug 44 conforms to an inner surface of the housing part 32 so that when the cartridge is assembled the plug in 44 forms a seal with the housing part 32. The inner wall 104 of the plug 44 conforms to an inner surface of the outlet tube 38 so that when the cartridge is assembled the plug 44 also forms a seal with the outlet tube 38. The inner wall 104 includes a pair of diametrically opposing slots 108 with the end of each slot having a semi-circular recess 110. Extended outwardly (i.e. in a direction away from the longitudinal axis of the cartridge) from the bottom of each slot in the inner wall 104 is a cradle section 112 shaped to receive a section of the aerosolisable material transport element 42 when the cartridge is assembled. The slots 108 and semi-circular recesses 110 provided by the inner wall of the plug 44 and the slots 88 and semi-circular recesses 90 of the outlet tube 38 are aligned so that the slots 88 in the outlet tube 38 accommodate respective ones of the cradles 112 with the respective semi-circular recesses in the outlet tube and plug cooperating to define holes through which the aerosolisable material transport element passes. The size of the holes provided by the semi-circular recesses through which the aerosolisable material transport element passes correspond closely to the size and shape of the aerosolisable material transport element, but are slightly smaller so a degree of compression is provided by the resilience of the plug 44. This allows aerosolisable material to be transported along the aerosolisable material transport element by capillary action while restricting the extent to which aerosolisable material which is not transported by capillary action can pass through the openings. As noted above, the plug 44 includes further openings 114 in the base part 100 through which the contact leads 41 for the vaporiser pass when the cartridge is assembled. The bottom of the base part of the plug includes spacers 116 which maintain an offset between the remaining surface of the bottom of the base part and the end cap 48. These spacers 116 include the openings 114 through which the electrical contact leads 41 for the vaporiser pass.

The end cap 48 comprises a polypropylene moulding with a pair of gold-plated copper electrode posts 46 mounted therein.

The ends of the electrode posts 44 on the bottom side of the end cap are close to flush with the interface end 54 of the cartridge provided by the end cap 48. These are the parts of the electrodes to which correspondingly aligned sprung contacts in the control unit connect when the cartridge is assembled and connected to the control unit. The ends of the electrode posts on the inside of the cartridge extend away from the end cap 48 and into the holes 114 in the plug 44 through which the contact leads 41 pass. The electrode posts are slightly oversized relative to the holes 114 and include a chamfer at their upper ends to facilitate insertion into the holes 114 in the plug where they are maintained in pressed contact with the contact leads for the vaporiser by virtue of the plug.

The end cap has a base section 124 and an upstanding wall 120 which conforms to the inner surface of the housing part 32. The upstanding wall 120 of the end cap 48 is inserted into the housing part 32 so the latch projections 70 engage with the latch recesses 68 in the housing part 32 to snap-fit the end cap 48 to the housing part when the cartridge is assembled. The top of the upstanding wall 120 of the end cap 48 abuts a peripheral part of the plug 44 and the lower face of the spacers 116 on the plug also abut the base section 124 of the plug so that when the end cap 48 is attached to the housing part it presses against the resilient part 44 to maintain it in slight compression.

The base portion 124 of the end cap 48 includes a peripheral lip 126 beyond the base of the upstanding wall 112 with a thickness which corresponds with the thickness of the outer wall of the housing part at the interface end of the cartridge. The end cap also includes an upstanding locating pin 122 which aligns with a corresponding locating hole 128 in the plug to help establish their relative location during assembly.

The dividing wall element 36 comprises a single moulding of polypropylene and includes a dividing wall 130 and a collar 132 formed by projections from the dividing wall 130 in the direction towards the interface end of the cartridge. The dividing wall element 36 has a central opening 134 through which the outlet tube 38 passes (i.e. the dividing wall is arranged around the outlet tube 38). In some embodiments, the dividing wall element 36 may be integrally formed with the outlet tube 38. When the cartridge is assembled, the upper surface of the outer wall 102 of the plug 44 engages with the lower surface of the dividing wall 130, and the upper surface of the dividing wall 130 in turn engages with the projections 66 on the inner surface of the outer wall 64 of the housing part 32. Thus, the dividing wall 130 prevents the plug from being pushed too far into the housing part 32 - i.e. the dividing wall 130 is fixedly located along the longitudinal axis of the cartridge by the protrusions 66 in the housing part and so provides the plug with a fixed surface to push against. The collar 132 formed by projections from the dividing wall includes a first pair of opposing projections / tongues 134 which engage with corresponding recesses on an inner surface of the outer wall 102 of the plug 44. The protrusions from the dividing wall 130 further provide a pair of cradle sections 136 configured to engage with corresponding ones of the cradle sections 112 in the part 44 when the cartridge is assembled to further define the opening through which the aerosolisable material transport element passes.

When the cartridge is assembled an air channel extending from the air inlet 50 to the aerosol outlet 60 through the cartridge is formed. Starting from the air inlet 50 in the side wall of the housing part 32, a first section of the air channel is provided by the gap 76 formed by the double-walled section 74 in the outer wall 64 of the housing part 32 and extends from the air inlet 50 towards the interface end 54 of the cartridge and past the plug 44. A second portion of the air channel is provided by the gap between the base of the plug 44 and the end cap 48. A third portion of the air channel is provided by the hole 106 through the plug 44. A fourth portion of the air channel is provided by the region within the inner wall 104 of the plug and the outlet tube around the vaporiser 40. This fourth portion of the air channel may also be referred to as an aerosol/aerosol generation region, it being the primary region in which aerosol is generated during use. The air channel from the air inlet 50 to the aerosol generation region may be referred to as an air inlet section of the air channel. A fifth portion of the air channel is provided by the remainder of the outlet tube 38. A sixth portion of the air channel is provided by the outer housing inner tube 62 which connects the air channel to the aerosol outlet 60. The air channel from the aerosol generation region to be the aerosol outlet may be referred to as an aerosol outlet section of the air channel.

Also, when the cartridge is assembled a reservoir 31 for aerosolisable material is formed by the space outside the air channel and inside the housing part 32. This may be filled during manufacture, for example through a filling hole which is then sealed, or by other means. The specific nature of the aerosolisable material, for example in terms of its composition, is not of primary significance to the principles described herein, and in general any conventional aerosolisable material of the type normally used in electronic cigarettes may be used. The present disclosure may refer to a liquid as the aerosolisable material, which as mentioned above may be a conventional e-liquid. However, the principles of the present disclosure apply to any aerosolisable material which has the ability to flow, and may include a liquid, a gel, or a solid, where for a solid a plurality of solid particles may be considered to have the ability to flow when considered as a bulk.

The reservoir is closed at the interface end of the cartridge by the plug 44. The reservoir includes a first region above the dividing wall 130 and a second region below the dividing wall 130 within the space formed between the air channel and the outer wall of the plug. The aerosolisable material transport element (capillary wick) 42 passes through openings in the wall of the air channel provided by the semi-circular recesses 108, 90 in the plug 44 and the outlet tube 38 and the cradle sections 112, 136 in the plug 44 and the dividing wall element 36 that engage with one another as discussed above. Thus, the ends of the aerosolisable material transport element extend into the second region of the reservoir from which they draw aerosolisable material through the openings in the air channel to the vaporiser 40 for subsequent vaporisation.

In normal use, the cartridge 2 is coupled to the control unit 4 and the control unit activated to supply power to the cartridge via the contact electrodes 46 in the end cap 48. Power then passes through the connection leads 41 to the vaporiser 40. The vaporiser is thus electrically heated and so vaporises a portion of the aerosolisable material from the aerosolisable material transport element in the vicinity of the vaporiser. This generates aerosol in the aerosol generation region of the air path. Aerosolisable material that is vaporised from the aerosolisable material transport element is replaced by more aerosolisable material drawn from the reservoir by capillary action. While the vaporiser is activated, a user inhales on the mouthpiece end 52 of the cartridge. This causes air to be drawn through whichever control unit air inlet 14 aligns with the air inlet 50 of the cartridge (which will depend on the orientation in which the cartridge was inserted into the control unit receptacle 8). Air then enters the cartridge through the air inlet 50, passes along the gap 76 in the double-walled section 74 of the housing part 32, passes between the plug 44 and the end cap 48 before entering the aerosol generation region surrounding the vaporiser 40 through the hole 106 in the base part 100 of the plug 44. The incoming air mixes with aerosol generated from the vaporiser to form a condensation aerosol, which is then drawn along the outlet tube 38 and the housing part inner 62 before exiting through the mouthpiece outlet/aerosol outlet 60 for user inhalation.

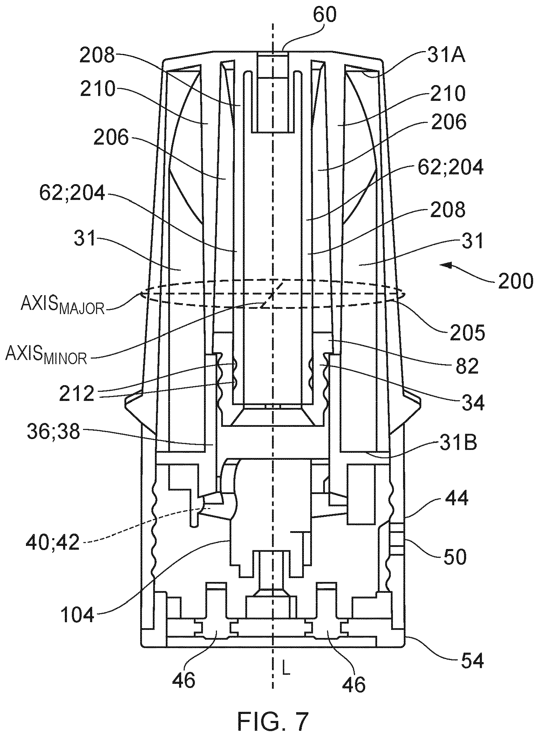

With reference to Figure 7, there is schematically shown a cross section view of a modified cartridge 200 for use with the control unit 4 shown in Figure 1 to form an aerosol provision system in accordance with certain embodiments of the disclosure. The cartridge 200 shown in Figure 7 is based on the construction of the cartridge 2 shown in Figures 1-6B, and comprises similar components as set out by the reference numerals that are common to both sets of Figures. For instance, the cartridge 200 defines a reservoir 31 which extends around the outlet tube 38 and the housing inner tube 62. The outlet tube 38 and the housing inner tube 62 form part of an air channel extending from the air inlet 50 for the cartridge 200 to the outlet 60 thereof. In accordance with such embodiments, the reservoir 31 may be annular, and is configured for containing aerosolisable material for aerosolising. In some embodiments of the cartridge 200, such as the embodiment of the cartridge shown in Figure 7, the dividing wall element 36 may be integrally formed with the outlet tube 38 to reduce the overall number of parts in the cartridge 200.

In accordance with some embodiments, the reservoir 31 may comprise a first end 31A which is proximal the aerosol outlet 60 of the cartridge 200, and a second end 31B which is proximal the vaporiser 40/aerosol generation region. The cartridge in accordance with some embodiments may comprise an elliptical cross section 205, which may be perpendicular to the longitudinal axis L of the cartridge 200 (as shown in Figure 7). As shown in Figure 7, the elliptical cross section 205 defines a major axis and a minor axis, which are axes that may be perpendicular to the longitudinal axis L of the cartridge 200.

With reference to the cartridge 200 shown in Figure 7, a first modification over the cartridge 2 shown in Figures 1-6B relates to the air channel from the cartridge 200 comprising a first portion 204, in the form of the housing inner tube 62, for receiving vaporised aerosolisable-material, extending from the outlet 60, towards the aerosol generation region. The aerosol generation region in accordance with the cartridge 200 surrounds the vaporiser 40 (not shown in Figure 7, but shown in Figure 2). In respect of this first portion 204, the cartridge 200 is configured such that the reservoir 31 is at least partially thermally insulated from the first portion 204 of the air channel. In that way, the thermal insulation reduces the extent of vaporised aerosolisable-material that might be relatively hot as compared to the relatively cooler aerosolisable-material in the located in the reservoir 31 from condensing inside the first portion 204 by way of the cooler aerosolisable-material located in the reservoir 31. Similarly, the presence of the first portion 204 of the air channel and thermal insulation assists with the prevention of heat from any hot vaporised aerosolisable-material inside the first portion 204 from being transmitted to the aerosolisable-material located in the reservoir 31.

In accordance with some embodiments, such as that shown in Figure 7, the first portion 204 may be at least partially surrounded by the reservoir 31. In some particular embodiments, the reservoir 31 may be located concentrically around the first portion 204. More generally, in some embodiments, the reservoir 31 (or more generally the container for containing aerosolisable material) surrounds the first portion 204 of the air channel. In these embodiments, the relatively cool aerosolisable material (e.g., liquid) to be vaporised may be said to surround the air channel. In some embodiments, such as that shown in Figure 7, the first portion 204 is tubular.

In some embodiments, the reservoir 31 may be entirely thermally insulated from the first portion 204 of the air channel. One way to achieve this, for instance, would be to have the first portion 204, or the length of first portion, extending a first distance from the outlet 31 corresponding to at least a second distance equal to a corresponding dimension (such as the length) of the reservoir 31.

In accordance with the present disclosure, at least a portion of thermal insulation is provided between the reservoir 31 and the first portion 204 of the air channel. In this way, the thermal insulation which generally has a relatively lower thermal conductivity than the aerosolisable material (e.g., the liquid to be vaporised) helps reduce the transfer of energy from the relatively hot aerosol generated by the aerosol generating component (e.g., the heater) to the aerosol generating material. As described above, this may help reduce the extent to which the relative hot aerosol condenses in the first portion 204 of the air channel and/or the extent to which the aerosol generating material is heated.

To further help reduce the build-up of condensation in the first portion 204, in accordance with some embodiments of the cartridge 200, the first portion 204 may be substantially straight, for instance as shown in Figure 7. This is as opposed to the first portion 204 containing a number of corners and bends, and/or forming a tortuous path, between the aerosol generation region and the outlet 60 which might otherwise serve to increase the number of sites for condensation formation inside the first portion 204.

It will be appreciated that the cartridge 200 might be configured in a number of different ways to achieve improved thermal insulation between the first portion 204 of the air channel and the reservoir 31.

For instance, in accordance with some embodiments, such as that shown in Figure 7, the cartridge 200 may comprise a cavity 206 between the first portion 204 of the air channel and the reservoir 31 for at least partially thermally insulating the reservoir from the first portion 204 of the air channel. The cavity 206 may comprise, and/or be filled with, any material that provides thermal insulation between the reservoir 31 and the first portion 204 of the air channel. For example, the cavity may comprise air, a vacuum, or another material that is suitably thermally insulating.

To further improve the thermal insulation effect provided by the cavity, in accordance with some embodiments the cavity may comprise a closed cavity, i.e. a cavity which is surrounded by walls on all sides as shown in Figure 7.

In a particular embodiment of the cavity, a first wall 208 of the cavity 206 may form at least a part of a wall of the first portion 204 of the air channel, and wherein a second wall 210 of the cavity 206 forms at least a part of a wall of the reservoir 31. In some of these embodiments, such as that shown in the cartridge from Figure 7, the second wall 210 may extend around the first wall 208. In that way, the cavity may at least partially surround the first portion of the air channel. In some particular embodiments, either or both of the first wall 208 and the second wall 210 may be tubular, and/or may be concentric (i.e. share the same centre axis - which in the case of the embodiment of cartridge shown in Figure 7 is the longitudinal axis L of the cartridge).

To ensure a uniform separation between the first wall and second wall, such to better ensure a more uniform thermal insulation effect across the length of the cavity, in some embodiments of the cartridge 200, the first wall 208 may be substantially parallel to the second wall 210.

In some embodiments of the cartridge 200, the cavity 206 may be elongate. In a particular embodiment, including in the embodiment of the cartridge shown in Figure 7, the cavity 206 may comprise a longitudinal axis, in the elongate direction of the cavity 206, which is parallel to the longitudinal axis L of the cartridge 200.

In embodiments where a vaporiser 40 is present in the cartridge 200 (as opposed to being located in the control unit of the aerosol provision system), in such embodiments the first end 31A of the reservoir 31 may be proximal the outlet 60 of the cartridge 200, and the second end 31B of the reservoir 31 proximal the vaporiser 40/aerosol generation region. This configuration efficiently uses the space inside the cartridge 200.

Also in embodiments where the vaporiser 40 is present in the cartridge 200, in some of these embodiments the first portion 204 of the air channel may be located between the vaporiser 40/aerosol generation region and the outlet 60.

With reference to the embodiment of the cartridge shown in Figure 7, the cartridge 200 in accordance with some embodiments may comprise a seal 34 located between the first portion 204 of the air channel and the aerosol generation region from the cartridge 200. Where the vaporiser 40 is present, the seal 34 may be located between the first portion of the air channel and the vaporiser 40. In a particular embodiment, the seal 34 forms a wall of the cavity 206, and/or may plug an end of this cavity 206, such to assist with the formation of the closed cavity 206 in the particular embodiment of cartridge 200 shown in Figure 7. In a very particular embodiment, an upper collar 82 from the seal 34 may plug an end of the cavity 206 proximal the aerosol generation region. To assist with accommodating the seal 34 in position, the seal 34 may be stretched around the first portion 204 of the air channel. To further improve the sealing effect of the seal 34, the seal may be provided with one or more internal circumferential ridges 212 which engage against the first portion 204 of the air channel when the seal is stretched around the first portion 204 of the air channel.

In these arrangements, the seal 34 further improves the thermal insulation effect caused by the cavity 206 by reducing the extent of vaporised aerosolisable-material from passing from the aerosol generation region/vaporiser 40 into the cavity 206 towards the reservoir 31.

It will be appreciated that the cartridge 200 may take many shapes and configurations as required. However, a particularly effective cartridge 200 shape, such as that shown in the embodiment of cartridge 200, may comprise the reservoir being annular and/or with an elliptical cross section. These shapes assist with making the cartridge 200 compact in size, and easy to hold and operate by a user. In particular, the elliptical shape for the reservoir 31 allows the cartridge 200 to adopt a shape that is convenient in terms of fitting snuggly inside a user's mouth during use of the cartridge 200.

To assist with the manufacturing of the cartridge 200, in some embodiments the first portion 204 of the air channel may be integrally formed with the outlet 60. In other terms, the outlet 60, the first wall 208 of the cavity 206, and the second wall 210 of the cavity 206 may be integrally formed, as shown for instance in the embodiment of cartridge 200 shown in Figure 7.

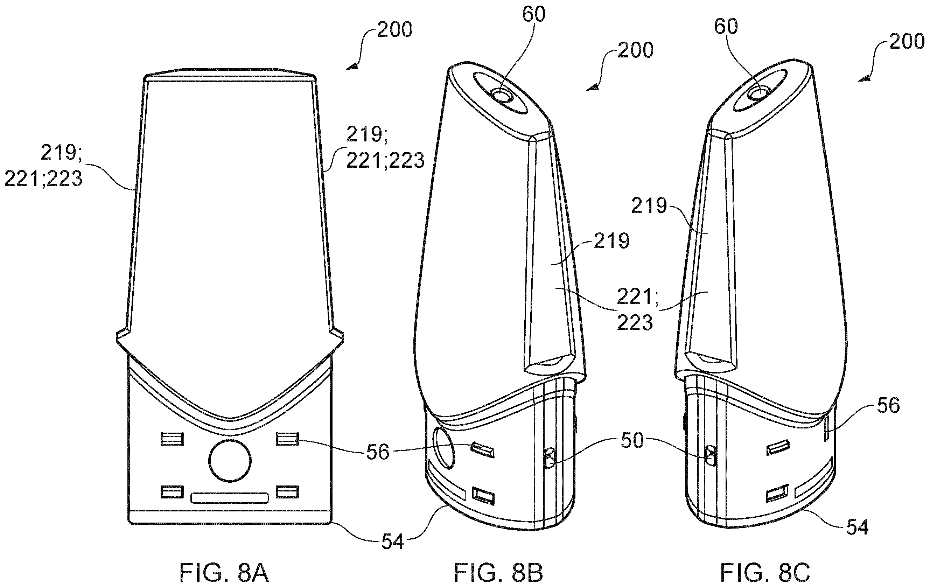

With reference to the cartridge 200 shown in Figures 8A-8C, an additional modification over the above cartridges described herein is the introduction of an aerosolisable-material-level observation means 219 for allowing a user to observe a level of aerosolisable material inside the reservoir 31. The aerosolisable-material-level observation means 205 may include one or more features and these will now be described. In accordance with some embodiments, the aerosolisable-material-level observation means 219 comprises a portion 221 of the cartridge 200. In accordance with some embodiments, the portion 221 of the cartridge may comprise at least one window 223, or a plurality of windows 223, for viewing into the reservoir 31. Such a window(s) 223 is shown best in Figures 8B-8C, where each window 223 is operable to allow a user to observe a level of aerosolisable material inside the reservoir 31. To assist with the viewing of aerosolisable material inside the reservoir, the portion 221 of the cartridge and/or the window(s) 223 may be translucent or transparent.

It is envisaged that the portion 221 of the cartridge may be located at any part, or combination of parts (noting such parts may, or may not, be located next to each other), of the cartridge 200. In some particular embodiments, the portion 221 of the cartridge 200 may be located on any visible surface(s) and/or visible edge(s) of the cartridge 200.

Rather than comprising at least one window 223, the portion 221 of the cartridge 200 may form a wall portion of the reservoir 31 with a reduced thickness. In that way, the reduced thickness may assist with the user being able to observe the level of aerosolisable material inside the reservoir 31.

The aerosolisable-material-level observation means 219, which allows a user to observe a level of aerosolisable material inside the reservoir 31, may in some embodiments be achieved by varying the level of pigmentation of a portion of the cartridge 200 in a way that allows this portion of the cartridge 200 to be more easily seen through.

In accordance with some embodiments of cartridge 200, the aerosolisable-material-level observation means 219 may comprise at least one light source for illuminating the contents of the reservoir 31. In some embodiments, the light source may be located in the reservoir 31 and/or attached to a wall of the reservoir 31.

In accordance with some embodiments of the cartridge 200, an optical property of the portion 221 of the cartridge 200 may be operable to be varied by the user of the cartridge 200. In that way, an aerosolisable-material-level observation means 219 may be provided for selectively allowing a user to observe the level of aerosolisable material inside the reservoir 31 by varying the optical property of the portion 221 of the cartridge 200. For instance, the optical property which may be varied may, in some embodiments, be the translucency and/or the transparency of the portion 221 of the cartridge 200.

In accordance with some of the above embodiments comprising the aerosolisable-material-level observation means 219, the portion 221/each window 223 of the cartridge 200 may extend from a first position proximal the outlet 60 to a second position that is proximal the vaporiser 40, as shown for instance in the embodiment of the cartridge 200 shown in Figures 8A-8C.

It is envisaged that in some embodiments of the cartridge 200, the aerosolisable-material-level observation means 205 may comprise a plurality of markings on the cartridge 200 for allowing the user to gauge the level of aerosolisable material inside the reservoir 31 against these plurality of markings. In some embodiments for example, the plurality of markings may be located on a surface of the housing inner tube 62, or on a wall of the reservoir 31 (such as the second wall 210). In some embodiments, the plurality of markings may comprise a plurality of parallel lines. To improve the visibility of the plurality of markings, in accordance with some embodiments the plurality of markings may be surrounded by a portion of the cartridge 200 that is transparent and/or translucent. In that respect, the plurality of markings may be opaque.

Thus in accordance with certain embodiments of the disclosure, a cartridge for an aerosol provision system may generally comprise a housing part having a mouthpiece end and an interface end, wherein the mouthpiece end includes an aerosol outlet for the cartridge and the interface end includes an interface for coupling the cartridge to a control unit. An air channel wall (which may be formed by various components of the cartridge) extends from an air inlet for the cartridge to the aerosol outlet via an aerosol generation region in the vicinity of a vaporiser. The cartridge has a reservoir within the housing part containing aerosolisable material for aerosolisation. The reservoir is defined by a region within the housing part which is outside the air channel and an end of the reservoir at the interface end of the housing part is sealed by a resilient plug comprising a base part and an outer wall, wherein the outer wall of the resilient plug forms a seal with an inner surface of the housing part. Respective ends of a aerosolisable material transport element pass through opening in the air channel or into the reservoir so as to convey aerosolisable material from the reservoir to the vaporiser.

One aspect of some particular cartridge configurations in accordance with certain embodiments of the disclosure is the manner in which the resilient plug 44 provides a seal to the housing part 32. In particular, in accordance with some example implementations the outer wall 102 of the resilient plug 44 which seals to the inner surface of the housing part 32 to form the end of the aerosolisable material reservoir extends in direction parallel to the longitudinal axis of the cartridge to a position which is further from the interface end of the cartridge than the aerosolisable material transport element / vaporiser. That is to say, the ends of the aerosolisable material transport element extends into the aerosolisable material reservoir in a region which is surrounded by the outer sealing wall of the resilient plug. Not only does this help seal the reservoir against leakage, it allows the geometry of the reservoir in the region which supplies the aerosolisable material transport element with aerosolisable material to be governed by the geometry of the resilient plug. For example, the radial thickness of the reservoir in this region can readily be made smaller than the radial thickness in other longitudinal positions along the air channel, which can help trap aerosolisable material in the vicinity of the aerosolisable material transport element, thereby helping to reduce the risk of dry out for different orientations of the cartridge during use.

The outer wall of the resilient plug may, for example, contact the inner surface of the housing part at locations over a distance of at least 5 mm, 6 mm, 7 mm, 8 mm, 9 mm and 10 mm in a direction extending from the interface end to the mouthpiece end (i.e. parallel to the longitudinal axis). The outer wall of the resilient plug may be in contact with the inner surface of the housing over the majority of this distance, or the outer wall of the resilient plug may include a number of (e.g. four) circumferential ridges 140 to help improve sealing. The resilient plug may be slightly oversized relative to the opening in the housing part so that it is biased into slight compression. For example, for the implementation shown in Figure 3B, the interior width of the housing part into which the resilient plug is inserted in the plane of this figure is around 17.5 mm, whereas the corresponding width of the resilient plug is around 18 mm, thereby placing the resilient plug into compression when inserted into the housing part. As can be most readily seen in Figures 5A to 5C, whereas the outer cross section of the cartridge housing part is symmetric under a 180° rotation, the resilient plug 44 does not have the same symmetry because it includes a flat 142 on one side to accommodate the air channel gap 76 provided by the double-walled section 74 of the housing part (i.e. the resilient plug is asymmetric in a plane perpendicular to a longitudinal axis of the cartridge to accommodate the double-walled section of the housing part).

In terms of the radial size / width of the reservoir in the annular region where the aerosolisable material transport element extends into the reservoir, a distance between the air channel wall and the outer wall of the resilient plug in this region may, for example, be in the range 3 mm to 8 mm. In the example cartridge discussed above which has a generally oval housing part and a generally circular air channel, it will be appreciated the thickness of the reservoir is different at different locations around the air channel. In this example the aerosolisable material transport element is arranged to extend into the reservoir in the region where it is widest in the axial direction, i.e. into the "lobes" of the oval reservoir around the air channel. The portions of the aerosolisable material transport element that extend into the reservoir may, for example, have a length, as measured from the interior of the air channel wall, in the range 2 mm to 8 mm, e.g. in the range 3 mm to 7 mm or in the range 4 mm to 6 mm. The specific geometry in this regard (and for other aspects of the configuration) may be chosen having regard to a desired rate of aerosolisable material transport, for example having regard to the capillary strength of the aerosolisable material transport element and the viscosity of the aerosolisable material, and may be established for a given cartridge design through modelling or empirical testing.

Another aspect of some particular cartridge configurations in accordance with certain embodiments of the disclosure is the manner in which the air channel is routed through the cartridge, and in particular from the air inlet to the vicinity of the vaporiser (the aerosol generation region). In particular, whereas in a conventional cartridges an air inlet is typically provided at the interface end of the cartridge, in accordance with certain embodiments of the disclosure, an air inlet for the cartridge is located in a side wall of the housing part at a position which is further from the interface end than at least a part of the resilient plug that seals an end of the reservoir. Thus, the air channel in the cartridge is initially routed from the air inlet towards the interface end and bypasses the resilient plug before changing direction and entering the aerosol generation chamber through the resilient plug. This can allow the outer surface of the cartridge at the interface end, where it is closest to the vaporiser, to be closed, thereby helping to reduce the risk of leakage from the cartridge, both in terms of aerosolisable material coming through the openings in the air channel which is not retained by the aerosolisable material transport element in the air channel (e.g. due to saturation / agitation) or aerosolisable material that has being vaporised but condensed back to aerosolisable material in the air channel during use. In some implementations, a distance from air inlet to the interface end of the housing part may be at least 5 mm, 6 mm, 7 mm, 8 mm, 9 mm or 10 mm.

In some example implementations an absorbent element, for example a portion of sponge material or a series of channels forming a capillary trap, may be provided between the air inlet and the aerosol generation chamber, for example in the region air channel formed between the base of the resilient plug and the end cap, to further help reduce the risk of leakage by absorbing aerosolisable material that forms in the air channel and so helping prevent the aerosolisable material travelling around the air channel through the air inlet or towards the aerosol outlet.

In some example implementations the air channel from the air inlet to the aerosol outlet may have its smallest cross-sectional area where it passes through the hole 106 in the resilient plug. That is to say, the hole in the resilient plug may be primarily responsible for governing the overall resistance to draw for the electronic cigarette.

Another aspect of some particular cartridge configurations in accordance with certain embodiments of the disclosure is the manner in which the dividing wall element divides the air reservoir into two regions, namely a main region above the dividing wall (i.e. towards a mouthpiece end of the cartridge) and a aerosolisable-material-supply region below the dividing wall (i.e. on the same side of the dividing wall as where the aerosolisable material transport element extends from the vaporiser into the reservoir). The dividing wall includes openings to govern the flow of aerosolisable material on the main region to the aerosolisable material supply region. The dividing wall can help retain aerosolisable material in the aerosolisable material supply region of the reservoir, example when the electronic cigarette is tilted through various orientations, which can help avoid dry out. The dividing wall can also conveniently provide a mechanical stop for the resilient plug to abut / press against so as to help correctly locate the resilient plug during assembly and maintain the resilient plug in slight compression between the dividing wall and the end cap when the cartridge is assembled.

In the example discussed above, the dividing wall is formed as a separate element from the housing part, wherein an inner surface of the housing part includes one or more protrusions arranged to contact the side of the dividing wall facing the mouthpiece end of the cartridge to locate the dividing wall along a longitudinal axis of the cartridge, but in other examples the dividing wall may be integrally formed with the housing part, as described for instance with respect to the embodiments of cartridge 200 shown in Figure 7.

In the example discussed above the dividing wall is in the form of an annular band around the air channel and comprises four fluid communication openings 150 located in respective quadrants of the band. However, more or fewer openings through the dividing wall may be provided in different implementations. Individual openings may, for example, have an area of between 4 mm² and 15 mm².

A combined area for the at least one openings as a fraction of the total area of the dividing wall exposed to aerosolisable material supply region of the reservoir region may be, for example, from 20% to 80%; 30% to 70% or 40% to 60%.

It will be appreciated that while the above description has focused on some specific cartridge configurations comprising a number of different features, cartridges in accordance with other embodiments of the disclosure may not include all these features. For example, in some implementations an air path generally of the kind discussed above, i.e. with an air inlet which is in a sidewall of the cartridge and closer to the mouthpiece end of the cartridge than the vaporiser, may be provided in a cartridge which does not include a resilient plug with an outer sealing wall which extends around the vaporiser and / or does not include a dividing wall element of the kind discussed above. Similarly, a cartridge which does include a resilient plug with an outer sealing wall which extends around the vaporiser may have an air inlet into the cartridge which is at the interface end of the cartridge, and not in a sidewall, and which may also not have a dividing wall element of the kind discussed above. Furthermore, a cartridge which does include a dividing wall element, might not include an air inlet located further from the interface end of the cartridge than the vaporiser and / or an extended outer sealing wall for a resilient plug as discussed above.

Also described herein in accordance with certain embodiments of the disclosure is a cartridge for an aerosol provision system, wherein the cartridge comprises: a reservoir for containing aerosolisable material for vaporising; an air channel extending from an air inlet for the cartridge to an outlet via an aerosol generation region; wherein the air channel comprises a first portion, for receiving vaporised aerosolisable-material, extending between the aerosol generation region and the outlet; wherein the reservoir is at least partially thermally insulated from the first portion of the air channel.

There has also been described in accordance with certain embodiments of the disclosure an aerosol provision system comprising the cartridge of any preceding claim and a control unit, wherein the control unit comprises a cartridge receiving section that includes an interface arranged to cooperatively engage with the cartridge so as to releasably couple the cartridge to the control unit, wherein the control unit further comprises a power supply and control circuitry.

In respect of the aerosol provision systems described herein, it will be appreciated that these need not necessarily be expressly limited to the combination of a cartridge 2;200 and a control unit 4, such that they might also relate to more generic type of aerosol provision systems. In that respect therefore, also described herein in accordance with certain embodiments of the disclosure is an aerosol provision system comprising: a reservoir for containing aerosolisable material for vaporising; an air channel extending from an air inlet to an outlet via an aerosol generating region; wherein the air channel comprises a first portion, for receiving vaporised aerosolisable-material, extending from aerosol generating region to the outlet; wherein the reservoir is at least partially thermally insulated from the first portion of the air channel.

While the above described embodiments have in some respects focussed on some specific example aerosol provision systems, it will be appreciated the same principles can be applied for aerosol provision systems using other technologies. That is to say, the specific manner in which various aspects of the aerosol provision system function, for example in terms of the underlying form of the vaporiser or vaporiser technology used are not directly relevant to the principles underlying the examples described herein.

In that respect, it will also be appreciated that various modifications may be made to the embodiments of aerosol provision system described herein. For instance, although the vaporiser 40 has been described in a number of the above embodiments as being located in the cartridge, it will be appreciated that in some embodiments the vaporiser may be located in the control unit of the aerosol provision system.

In order to address various issues and advance the art, this disclosure shows by way of illustration various embodiments in which the claimed invention(s) may be practiced. The advantages and features of the disclosure are of a representative sample of embodiments only, and are not exhaustive and/or exclusive. They are presented only to assist in understanding and to teach the claimed invention(s). It is to be understood that advantages, embodiments, examples, functions, features, structures, and/or other aspects of the disclosure are not to be considered limitations on the disclosure as defined by the claims or limitations on equivalents to the claims, and that other embodiments may be utilised and modifications may be made without departing from the scope of the claims. Various embodiments may suitably comprise, consist of, or consist essentially of, various combinations of the disclosed elements, components, features, parts, steps, means, etc. other than those specifically described herein, and it will thus be appreciated that features of the dependent claims may be combined with features of the independent claims in combinations other than those explicitly set out in the claims. In that respect, for instance, it will be appreciated that the features relating to the final independent claim as set out below may optionally include any combination of the features set out in the first independent claim and its dependent claims as set out below. The disclosure may include other inventions not presently claimed, but which may be claimed in future.

### CONSISTORY SET OF CLAUSES

1. A cartridge for an aerosol provision system, wherein the cartridge comprises:
   a reservoir for containing aerosolisable material for vaporising;
   an air channel extending from an air inlet for the cartridge to an outlet; wherein the air channel comprises a first portion, for receiving vaporised aerosolisable-material, extending from the outlet;
   wherein the reservoir is at least partially thermally insulated from the first portion of the air channel.
2. A cartridge according to clause 1, wherein the first portion of the air channel is at least partially surrounded by the reservoir.
3. A cartridge according to any preceding clause, wherein the first portion is substantially straight.
4. A cartridge according to any preceding clause, wherein the first portion is tubular.
5. A cartridge according to any preceding clause, wherein the first portion of the air channel extends a first distance from the outlet corresponding to at least a second distance equal to a corresponding dimension of the reservoir.
6. A cartridge according to any preceding clause, wherein the cartridge comprises a cavity between the first portion of the air channel and the reservoir for at least partially thermally insulating the reservoir from the first portion of the air channel.
7. A cartridge according to clause 6, wherein the cavity comprises air.
8. A cartridge according to clause 6 or 7, wherein the cavity comprises a closed cavity.
9. A cartridge according to any of clauses 6-8, wherein a first wall of the cavity forms at least a part of a wall of the first portion of the air channel, and wherein a second wall of the cavity forms at least a part of a wall of the reservoir.
10. A cartridge according to clause 9, wherein the second wall extends around the first wall.
11 A cartridge according to clause 9 or 10, wherein the first wall is substantially parallel to the second wall.
12. A cartridge according to any of clauses 6-11, wherein the cavity is elongate.
13. A cartridge according to any of clauses 6-12, wherein the cavity at least partially surrounds the first portion of the air channel.
14. A cartridge according to any preceding clause, wherein the cartridge further comprises a vaporiser for vaporising the aerosolisable material to generate vaporised aerosolisable-material, the vaporiser being located in an aerosol generation region.
15. A cartridge according to clause 14, wherein the first portion of the air channel extends between the aerosol generation region and the outlet.
16. A cartridge according to clause 14 or 15, wherein the reservoir comprises a first end which is proximal the outlet of the cartridge, and a second end which is proximal the vaporiser.
17. A cartridge according to any of clauses 14 to 16, wherein the first portion of the air channel is located between the vaporiser and the outlet.
18. A cartridge according to any preceding clause, wherein the cartridge comprises a seal located between the first portion of the air channel and an aerosol generation region.
19. A cartridge according to clause 18, when further dependent on any of clauses 14-17, wherein the seal is located between the first portion of the air channel and the vaporiser.
20. A cartridge according to clauses 18 or 19, when further dependent on any of clauses 6-13, wherein the seal forms a wall of the cavity.
21. A cartridge according to any of clauses 18-20, when further dependent on any of clauses 6-13, wherein the seal plugs an end of the cavity proximal the aerosol generation region.
22. A cartridge according to any of clauses 18-21, wherein the seal is stretched around the first portion of the air channel.
23. A cartridge according to any of clauses 18-22, wherein the seal comprises one or more internal circumferential ridges which engage against the first portion of the air channel.
24. A cartridge according to any preceding clause, wherein the reservoir is annular.
25. A cartridge according to any preceding clause, wherein the reservoir comprises an elliptical cross section.
26. A cartridge according to any preceding clause, wherein the first portion of the air channel is integrally formed with the outlet.
27. A cartridge according to any preceding clause, wherein the reservoir contains the aerosolisable material for vaporising.
28. A cartridge according to any preceding clause, wherein the cartridge further comprises an aerosolisable-material-level observation means for allowing a user to observe a level of aerosolisable material inside the reservoir,
   wherein the aerosolisable-material-level observation means comprises a portion of the cartridge,
   wheren the portion of the cartridge comprises at least one window for viewing into the reservoir.
29. A cartridge according to clause 28, wherein the portion of the cartridge comprises a plurality of windows for viewing into the reservoir.
30. An aerosol provision system comprising the cartridge of any preceding clause and a control unit, wherein the control unit comprises a cartridge receiving section that includes an interface arranged to cooperatively engage with the cartridge so as to releasably couple the cartridge to the control unit, wherein the control unit further comprises a power supply and control circuitry.
31. An aerosol provision system comprising:
   a reservoir for containing aerosolisable material for vaporising;
   an air channel extending from an air inlet to an outlet via an aerosol generating region; wherein the air channel comprises a first portion, for receiving vaporised aerosolisable-material, extending from aerosol generating region to the outlet;
   wherein the reservoir is at least partially thermally insulated from the first portion of the air channel.

## Claims

1. A cartridge (200) for an aerosol provision system, wherein the cartridge (200) comprises:
a reservoir (31) for containing aerosolisable material for vaporising;
an air channel extending from an air inlet (50) for the cartridge to an outlet (60); wherein the air channel comprises a first portion (204), for receiving vaporised aerosolisable-material, extending from the outlet (60);
wherein the reservoir (31) is at least partially thermally insulated from the first portion (204) of the air channel, and wherein the first portion (204) of the air channel is at least partially surrounded by the reservoir (31).

2. A cartridge according to claim 1, wherein the cartridge (200) further comprises thermal insulation between the reservoir (31) and the first portion (204) of the air channel.

3. A cartridge according to any preceding claim, wherein the outlet (60) comprises a mouthpiece outlet.

4. A cartridge according to any preceding claim, wherein the first portion (204) is substantially straight.

5. A cartridge according to any preceding claim, wherein the first portion (204) is tubular.

6. A cartridge according to any preceding claim, wherein the cartridge (200) comprises a cavity (206) between the first portion (204) of the air channel and the reservoir (31) for at least partially thermally insulating the reservoir (31) from the first portion (204) of the air channel.

7. A cartridge according to claim 7, wherein a first wall of the cavity (206) forms at least a part of a wall of the first portion (204) of the air channel, and wherein a second wall of the cavity (206) forms at least a part of a wall of the reservoir (31).

8. A cartridge according to claim 6 or 7, wherein the cavity (206) at least partially surrounds the first portion (204) of the air channel.

9. A cartridge according to any preceding claim, wherein the cartridge further comprises a vaporiser (40) for vaporising the aerosolisable material to generate vaporised aerosolisable-material, the vaporiser (40) being located in an aerosol generation region.

10. A cartridge according to claim 9, wherein the first portion (204) of the air channel is located between the vaporiser (40) and the outlet (60).

11. A cartridge according to any preceding claim, wherein the first portion (204) of the air channel is integrally formed with the outlet (60).

12. A cartridge according to any preceding claim, wherein the reservoir (31) contains the aerosolisable material for vaporising.

13. A cartridge according to any preceding claim, wherein the cartridge further comprises an aerosolisable-material-level observation means for allowing a user to observe a level of aerosolisable material inside the reservoir,
wherein the aerosolisable-material-level observation means comprises a portion of the cartridge,
wheren the portion of the cartridge comprises at least one window for viewing into the reservoir.

14. An aerosol provision system comprising the cartridge (200) of any preceding claim and a control unit (4), wherein the control unit (4) comprises a cartridge receiving section (8) that includes an interface arranged to cooperatively engage with the cartridge (200) so as to releasably couple the cartridge (200) to the control unit (4), wherein the control unit (4) further comprises a power supply (16) and control circuitry (18).

15. An aerosol provision system comprising:
a reservoir (31) for containing aerosolisable material for vaporising;
an air channel extending from an air inlet (50) to an outlet (60) via an aerosol generating region; wherein the air channel comprises a first portion (204), for receiving vaporised aerosolisable-material, extending from an aerosol generating region to the outlet (60);
wherein the reservoir (31) is at least partially thermally insulated from the first portion (204) of the air channel, and wherein the first portion (204) of the air channel is at least partially surrounded by the reservoir (31).
